# FASCICULE DE BREVET EUROPEEN

(11) **EP 4 078 052 B1**
(45) Date de publication et mention de la délivrance du brevet: **26.11.2025**
(21) Numéro de dépôt: 20845400.9
(22) Date de dépôt: 07.12.2020
(51) Int. Cl.: F25B 49/02, B60H 1/00, F25B 5/04, F25B 25/00, F25B 47/02, B60H 1/32

(54) **PROCÉDÉ DE DÉGIVRAGE D'UN CIRCUIT DE RÉGULATION THERMIQUE POUR VÉHICULE, NOTAMMENT POUR VÉHICULE AUTOMOBILE**
VERFAHREN ZUM ABTAUEN EINES THERMISCHEN REGELKREISES FÜR EIN FAHRZEUG, INSBESONDERE FÜR EIN KRAFTFAHRZEUG
METHOD FOR DEFROSTING A THERMAL REGULATION CIRCUIT FOR A VEHICLE, IN PARTICULAR FOR A MOTOR VEHICLE

(30) Priorité: 18.12.2019 FR 1914757
(43) Date de publication de la demande: 26.10.2022
(73) Titulaire: VALEO SYSTEMES THERMIQUES, 78320 Le Mesnil Saint-Denis (FR)
(72) Inventeur: AKIKI, Roland, 78320 Le Mesnil-Saint-Denis (FR); LIU, Jin-Ming, 78320 Le Mesnil-Saint-Denis (FR)
(74) Mandataire: Valeo Powertrain Systems
(86) Numéro de dépôt international: PCT/FR2020/052290
(87) Numéro de publication internationale: WO 2021/123544

(56) Documents cités:
- WO-A1-2018/185415
- WO-A1-2019/160294
- FR-A1- 2 983 285
- FR-A1- 3 055 250

## Description

L'invention concerne un procédé de dégivrage d'un circuit de régulation thermique pour véhicule, notamment pour véhicule automobile. Il pourra en particulier s'agir d'un circuit d'un système de ventilation, chauffage et/ou de conditionnement d'air dudit véhicule.

Les véhicules automobiles sont couramment équipés d'un circuit de régulation thermique comprenant une boucle de circulation de fluide réfrigérant utilisé pour chauffer ou refroidir différentes zones ou différents composants du véhicule. Il est notamment connu d'utiliser ce circuit pour traiter thermiquement un flux d'air envoyé dans l'habitacle du véhicule.

Dans les véhicules équipés de moteur thermique, les calories dégagées par le moteur suffisent généralement à chauffer l'habitacle. Ce n'est pas le cas des véhicules à motorisation hybride ou électrique.

Il a de la sorte été proposé d'utiliser les circuits de régulation thermique non seulement pour climatiser l'habitacle du véhicule mais également pour le réchauffer, en fonctionnant en mode pompe à chaleur.

Cependant, dans le cas de températures extérieures trop froides et/ou d'un air trop humide, l'échangeur utilisé par la boucle de circulation de fluide réfrigérant en face avant du véhicule pour extraire les calories de l'air subit un givrage et il convient d'assurer son dégivrage. Des circuits de régulation thermique pour véhicule et procédés de dégivrage associés sont respectivement montrés par chacun des documents FR2983285A1, WO2019/160294A1, et FR3055250A1.

Différentes solutions ont déjà été proposées en ce sens et l'invention propose d'améliorer la situation.

A cette fin, l'invention propose un procédé de dégivrage d'un circuit de régulation thermique, notamment pour véhicule automobile, comme défini par la revendication indépendante 1 annexée, ledit circuit de régulation thermique étant muni d'une boucle de circulation d'un fluide réfrigérant comprenant un premier échangeur de chaleur, susceptible de subir un givrage, ainsi que des deuxième et troisième échangeurs, les deuxième et troisième échangeurs étant destinés à échanger de la chaleur entre le fluide réfrigérant et un fluide caloporteur, ladite boucle comprenant en outre une bouteille permettant de stocker une partie dudit fluide réfrigérant, ledit procédé comprenant une étape, dite de dégivrage, de circulation du fluide réfrigérant successivement dans le deuxième échangeur de chaleur, la bouteille puis les premier et troisième échangeurs avec refroidissement du fluide réfrigérant dans les premier et deuxième échangeurs et réchauffage du fluide réfrigérant dans le troisième échangeur.

Ainsi, dans une configuration de boucle de circulation de fluide réfrigérant avec bouteille située entre les deuxième et premier échangeurs selon le sens de circulation du fluide réfrigérant, les deuxième et premier échangeurs forment une source froide et le troisième échangeur forme une source chaude dans un fonctionnement en système de réfrigération de la boucle de fluide réfrigérant. La capacité totale de chauffage du circuit de régulation thermique est supérieure à sa capacité de refroidissement, notamment puisque le compresseur participe à la capacité de chauffage. Il est donc possible d'utiliser une partie de cette capacité de chauffage pour assurer le dégivrage du premier échangeur et c'est ce que propose l'invention.

Le procédé conforme à l'invention pourra également présenter les caractéristiques suivantes, prises seules ou selon toutes combinaisons techniquement possibles qui forment autant de modes de réalisation de l'invention :
- lesdits deuxième et troisième échangeurs font partie d'une même boucle de fluide caloporteur du circuit de régulation thermique,
- lesdits deuxième et troisième échangeurs sont connectés en série dans ladite boucle de fluide caloporteur, au moins pendant ladite étape de dégivrage,
- lesdits deuxième et troisième échangeurs sont couplés thermiquement par un échangeur thermique intermédiaire, au moins pendant ladite étape de dégivrage,
- ladite boucle de fluide réfrigérant est configurée pour fonctionner selon un mode de pompe à chaleur en prélevant de la chaleur sur un flux d'air à l'aide dudit premier échangeur et en restituant ladite chaleur au fluide caloporteur à l'aide dudit deuxième échangeur,
- ledit flux d'air est un flux d'air extérieur provenant de l'extérieur du véhicule,
- ledit circuit de régulation thermique est destiné au traitement thermique d'un habitacle et/ou de composants d'un véhicule,
- ladite boucle de circulation du fluide réfrigérant comprend un compresseur,
- ledit compresseur est situé entre les troisième et deuxième échangeurs selon le sens de circulation du fluide réfrigérant,
- ladite boucle de circulation du fluide caloporteur comprend un dispositif de chauffage électrique dudit fluide caloporteur,
- ledit dispositif de chauffage électrique est situé entre le deuxième échangeur et le troisième échangeur selon le sens de circulation du fluide caloporteur,
- ladite boucle de circulation du fluide caloporteur comprend un radiateur, destiné à un chauffage d'un habitacle,
- ledit radiateur est situé entre le deuxième échangeur et le troisième échangeur selon le sens de circulation du fluide caloporteur,
- ladite boucle de circulation du fluide réfrigérant comprend un premier détendeur,
- ledit premier détendeur est situé entre la bouteille et le premier échangeur selon le sens de circulation du fluide réfrigérant,
- ladite boucle de circulation du fluide réfrigérant comprend un second détendeur,
- ledit second détendeur est situé entre les premier et troisième échangeurs selon le sens de circulation du fluide réfrigérant,
- ledit procédé comprend une étape de contrôle du dégivrage effectuée dans un premier temps par le premier détendeur,
- ladite étape de contrôle est effectuée alors que le second détendeur est entièrement ouvert,
- ladite étape de contrôle est effectuée, dans un second temps, par le second détendeur,
- ledit procédé comprend une étape de prise en compte d'un débit d'air entrant dans l'habitacle,
- ledit procédé comprend une étape de contrôle de la chaleur délivrée par le dispositif de chauffage électrique,
- ledit procédé comprend une étape de contrôle du débit de fluide caloporteur,
- ledit procédé comprend une étape de détermination de la pression dans le troisième échangeur de chaleur,
- ledit procédé comprend une étape d'augmentation du débit de fluide caloporteur si la pression déterminée est inférieure à un premier seuil prédéterminé,
- la pression est déterminée par un capteur de mesure de pression et/ou assimilée à une pression en entrée du compresseur,
- le circuit de fluide caloporteur comporte une pompe de circulation du fluide,
- ledit procédé comprend une étape de contrôle d'un débit de fluide caloporteur par variation d'un régime de rotation de la pompe,
- ledit procédé comprend une étape de vérification d'un état de sur-chauffage du fluide réfrigérant en sortie du troisième échangeur,
- ledit procédé comprend une étape de limitation du débit de fluide caloporteur si l'état de sur-chauffage du fluide réfrigérant est supérieur à un seuil en sortie du troisième échangeur,
- ledit procédé comporte une étape de détermination d'un rapport de compression du compresseur, le rapport de compression étant égal au rapport d'une pression de sortie et d'une pression d'entrée du compresseur,
- ledit procédé comprend une étape d'augmentation du débit de fluide caloporteur si le rapport de compression est supérieur à un deuxième seuil prédéterminé,
- ledit procédé comporte une étape de diminution du débit de fluide caloporteur si le rapport de compression est inférieur à un troisième seuil prédéterminé.

D'autres caractéristiques et avantages de l'invention apparaitront au cours de la lecture de la description détaillée qui va suivre pour la compréhension de laquelle on se reportera aux dessins annexés dans lesquels :
La figure 1 illustre de manière schématique un exemple de boucle de circulation permettant la mise en œuvre du procédé de dégivrage conforme à l'invention,
La figure 2 illustre la boucle de circulation de la figure 1 dans un mode de climatisation sans refroidissement de composants,
La figure 3 illustre la boucle de circulation de la figure 1 dans un mode de climatisation avec refroidissement de composants,
La figure 4 illustre la boucle de circulation de la figure 1 dans un mode de pompe à chaleur,
La figure 5 illustre la boucle de circulation de la figure 1 dans un mode de récupération de chaleur,
La figure 6 illustre la boucle de circulation de la figure 1 dans un mode de dégivrage selon le procédé de dégivrage conforme à l'invention.

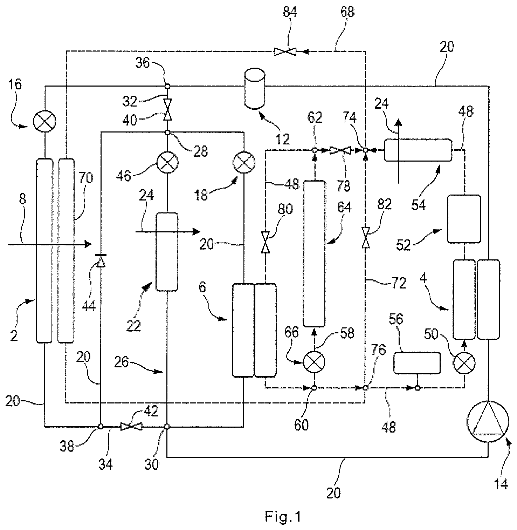

Comme illustré aux figures 1 à 6, l'invention s'applique à un circuit de régulation thermique pour véhicule, notamment véhicule automobile, et concerne un procédé de dégivrage dudit circuit. Ledit circuit comprend une boucle de circulation d'un fluide réfrigérant et, ici, une boucle de circulation d'un fluide caloporteur. Lesdites boucles sont préférentiellement fermées.

Les termes amont et aval employés dans la description qui suit se réfèrent au sens de circulation du fluide considéré, c'est-à-dire le fluide réfrigérant, le fluide caloporteur, un flux d'air extérieur à un habitacle du véhicule et/ou un flux d'air intérieur envoyé vers l'habitacle du véhicule.

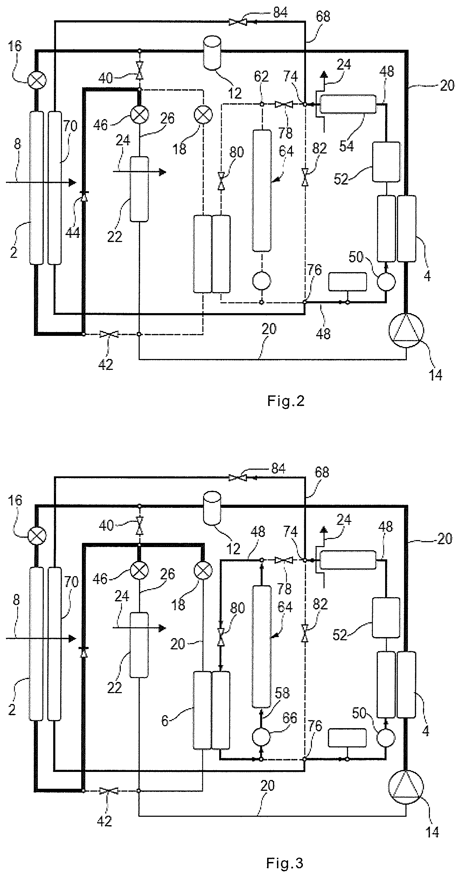

A la figure 1, la boucle de fluide réfrigérant est illustrée en traits pleins et la boucle de fluide caloporteur est illustrée en traits mixtes. Aux figures 2 à 6, pour chacune des boucles, les portions parcourues par leur fluide respectif sont en traits pleins et les portions sans circulation de fluide en traits pointillés. Des traits pleins d'épaisseur différente sont de plus utilisés. Plus précisément, les traits épais correspondent à des portions haute pression et les traits fins à des portions basse pression de la boucle de fluide réfrigérant.

Les dénominations « premier/ère », « deuxième », etc...utilisées dans la suite n'ont pas vocation à indiquer un niveau de hiérarchisation ou ordonnancer les termes qu'elles accompagnent. Ces dénominations permettent juste de distinguer les termes qu'elles accompagnent et peuvent être interverties sans que soit réduite la portée de l'invention.

Le fluide réfrigérant est par exemple un fluide susceptible de passer de phase liquide à gazeuse et réciproquement dans les conditions de température et de pression de la boucle de circulation du fluide réfrigérant. Il peut s'agir d'un fluide connu sous le nom de R134a ou d'un fluide connu sous le nom de R1234yf. Il pourra encore s'agir d'un fluide restant essentiellement à l'état gazeux comme le R744.

Le fluide caloporteur est par exemple un liquide, notamment de l'eau additionnée d'antigel tel que du glycol.

La boucle de circulation de fluide réfrigérant comprend un premier échangeur de chaleur 2, susceptible de subir un givrage, ainsi qu'un deuxième échangeur 4 et un troisième échangeur 6. Ledit deuxième échangeur 4 et ledit troisième échangeur 6 sont destinés à échanger de la chaleur entre le fluide réfrigérant et le fluide caloporteur.

Le procédé conforme à l'invention a pour objectif de permettre le dégivrage du premier échangeur 2, ceci grâce à une étape de dégivrage, comme cela sera développé plus bas.

Préférentiellement, ladite boucle de fluide réfrigérant est configurée pour fonctionner non seulement selon un mode de dégivrage mais aussi selon différents autres modes, notamment un mode de climatisation, avec ou sans refroidissement de batterie, un mode de pompe à chaleur et/ou un mode de récupération de chaleur, en autres.

Selon le mode de pompe à chaleur, ladite boucle de circulation de fluide réfrigérant est configurée pour fonctionner en prélevant de la chaleur sur un flux d'air, symbolisé par une flèche repérée 8, à l'aide dudit premier échangeur 2 et en restituant ladite chaleur au fluide caloporteur à l'aide dudit deuxième échangeur 4. De la sorte, si l'air extérieur est trop froid et/ou trop humide, le premier échangeur 2 peut se couvrir de givre. **En** effet, l'air perdant de la chaleur au contact du premier échangeur 2, les particules d'eau contenues dans l'air se solidifie et se dépose sur l'échangeur. Celui ne peut alors plus assurer sa fonction car la couche de givre ainsi formée l'isole de l'air. Cela étant, l'étape de dégivrage conforme à l'invention pourra être mise en œuvre que le givrage soit apparu en raison du phénomène précédent ou pour tout autre raison.

Ladite boucle de circulation est destinée, par exemple, au traitement thermique d'un habitacle et/ou de composants d'un véhicule et ledit flux d'air est un flux d'air extérieur provenant de l'extérieur du véhicule. Ledit premier échangeur 2 comprend, par exemple, une ou plusieurs passes de circulation du fluide réfrigérant. Il s'agit, notamment, d'un évaporateur condenseur. Il est destiné à être positionné en face avant du véhicule, ledit flux d'air le traversant ayant préalablement traversé la calandre. Ledit deuxième échangeur 4 comprend, par exemple, une ou plusieurs passes de circulation du fluide réfrigérant et une ou plusieurs passes de circulation du fluide caloporteur. Il forme de la sorte un échangeur bi-fluide, en particulier un condenseur pour le fluide réfrigérant. Ledit troisième échangeur 6 comprend, par exemple, une ou plusieurs passes de circulation du fluide réfrigérant et une ou plusieurs passes de fluide caloporteur. Il forme de la sorte un échangeur bi-fluide, en particulier un refroidisseur pour le fluide caloporteur.

Ladite boucle de circulation du fluide réfrigérant comprend en outre une bouteille 12 permettant de stocker une partie dudit fluide réfrigérant. Ladite bouteille est ici située entre le deuxième échangeur 4 et le premier échangeur 2, selon le sens de circulation du fluide réfrigérant.

Ladite boucle de circulation du fluide réfrigérant comprend en outre un compresseur 14. Ledit compresseur 14 est situé entre le troisième échangeur 6 et le deuxième échangeur 4, selon le sens de circulation du fluide réfrigérant. Ladite boucle de circulation du fluide réfrigérant comprend en outre un premier détendeur 16, situé entre la bouteille 12 et le premier échangeur 2, selon le sens de circulation du fluide réfrigérant, et un second détendeur 18, situé entre le premier échangeur 2 et les troisièmes échangeurs 6, selon le sens de circulation du fluide réfrigérant.

Avantageusement, le compresseur 14, le deuxième échangeur 4, la bouteille 12, le premier détendeur 16, le premier échangeur 2 et le deuxième détendeur 18 et le troisième échangeur 6 forme un circuit fermé 20, dit de dégivrage, dans lequel le fluide réfrigérant est destiné à circuler dans cet ordre, sous l'action du compresseur 14. Le premier détendeur 16 et le deuxième détendeur 18 sont ici intercalés, respectivement, entre la bouteille 12 et le premier échangeur 2 et entre le premier échangeur 2 et le troisième échangeur 6.

Dans le mode de réalisation illustré, ladite boucle de circulation du fluide réfrigérant comprend en outre un quatrième échangeur 22. Ledit quatrième échangeur 22 est avantageusement destiné à échanger de la chaleur entre le fluide réfrigérant et un flux d'air intérieur, illustré par une flèche repérée 24, destiné à être introduit dans l'habitacle du véhicule. Ledit quatrième échangeur 22 comprend, par exemple, une ou plusieurs passes de circulation du fluide réfrigérant. Il s'agit, notamment d'un évaporateur du fluide réfrigérant.

Ladite boucle de circulation du fluide réfrigérant comprend ici, outre la boucle de dégivrage 20, une première branche de dérivation 26, situé entre un premier point 28 de dérivation et un deuxième point 30 de dérivation. Le premier point de dérivation 28 est situé entre le premier échangeur 2 et le deuxième détendeur 18 sur le circuit de dégivrage 20. Le deuxième point de dérivation 30 est situé entre le troisième échangeur 6 et le compresseur 14 sur le circuit de dégivrage 20. Ladite première branche de dérivation comprend l'évaporateur 22 et un troisième détendeur 46, situé entre le premier point de dérivation 28 et l'évaporateur 22.

Le premier détendeur 16, le deuxième détendeur 18 et/ou le troisième détendeur 46 sont avantageusement configurés pour sélectivement ouvrir totalement, fermer totalement ou opérer une détente, selon un débit donné, du fluide réfrigérant circulant dans le circuit et/ou la branche associé.

Ladite boucle de circulation du fluide réfrigérant comprend encore, notamment, une première branche de contournement 32 et une deuxième branche de contournement 34. La première branche de contournement est située entre un premier point de contournement 36 et le premier point de dérivation 28. Le premier point de contournement 36 est situé entre la bouteille 12 et le premier détendeur 16 sur le circuit de dégivrage 20. La deuxième branche de contournement est située entre un deuxième point de contournement 38 et le deuxième point de dérivation 30. La première branche de contournement comprend une première vanne bidirectionnelle 40 et/ou la deuxième branche de contournement comprend une seconde vanne bidirectionnelle 42. On pourra d'ailleurs noter que le circuit de dégivrage comprend une vanne anti-retour 44 entre le deuxième point de contournement 38 et le premier point de dérivation 28.

En variante, bien que cela ne soit pas illustré, la boucle de circulation du fluide réfrigérant comprend un ou plusieurs échangeurs internes.

Comme l'intérêt en sera développé plus loin, lesdits deuxième et troisième échangeurs 4, 6 font partie de la boucle de fluide caloporteur, lesdits deuxième et troisième échangeurs 4, 6 étant connectés en série au moins pendant ladite étape de dégivrage. Autrement dit, lesdits deuxième et troisième échangeurs font préférentiellement partie de la même boucle de circulation du fluide caloporteur et le fluide caloporteur passant dans l'un passe dans l'autre, au moins pendant ladite étape de dégivrage.

Selon un mode de réalisation non représenté, lesdits deuxième et troisième échangeurs sont couplés thermiquement par un échangeur thermique intermédiaire, au moins pendant ladite étape de dégivrage. Autrement dit, le circuit de fluide caloporteur dans lequel le deuxième échangeur est disposé ne communique pas fluidiquement avec le circuit de fluide caloporteur dans lequel le troisième échangeur est disposé. L'échange thermique entre le deuxième et le troisième échangeur s'effectue par l'intermédiaire de l'échangeur thermique intermédiaire.

Ladite boucle de circulation du fluide caloporteur comprend ici un circuit 48, dit principal, comprenant le deuxième échangeur 4 et le troisième échangeur 6. Ledit circuit principal 48 comprend en outre une pompe principale 50 permettant la circulation du fluide caloporteur.

Ladite boucle de circulation du fluide caloporteur comprend en outre un dispositif de chauffage électrique 52 dudit fluide caloporteur, situé entre le deuxième échangeur 4 et le troisième échangeur 6 selon le sens de circulation du fluide caloporteur dans le circuit principal 48.

Ladite boucle de circulation du fluide caloporteur comprend encore ici un radiateur de chauffage 54, destiné à un chauffage de l'habitacle, en particulier en échangeant de la chaleur avec le flux d'air intérieur 24. Ledit radiateur de chauffage 54 est situé entre le deuxième échangeur 4 et le troisième échangeur 6, en particulier entre le dispositif électrique de chauffage 52 et le troisième échangeur 6, selon le sens de circulation du fluide caloporteur dans le circuit principal.

Autrement dit, ici, ledit circuit principal 48 comprend dans cet ordre selon le sens de circulation du fluide caloporteur la pompe principale 50, le deuxième échangeur 2, le dispositif de chauffage électrique 52, le radiateur de chauffage 54 et le troisième échangeur 6. Il est également muni d'un vase d'expansion 56, situé par exemple en amont de la pompe principale 50.

La boucle de circulation du fluide caloporteur comprend en outre, tel qu'illustré, une première branche de bouclage 58, situé entre un premier point de bouclage 60 et un deuxième point de bouclage 62. Le premier point de bouclage 60 est situé entre le troisième échangeur 6 et la pompe principale 50 sur le circuit principal 48. Ledit deuxième point de bouclage 62 est situé entre le radiateur de chauffage 54 et le troisième échangeur 6 sur le circuit principal 48. Ladite première branche de bouclage 58 comprend un cinquième échangeur 64, destiné notamment à la régulation thermique de composants électriques du véhicule tels qu'une batterie et/ou des composants électroniques, ceci par échange directe ou indirecte. Ladite première branche de bouclage 58 comprend en outre une pompe de bouclage 66.

Ladite boucle de circulation comprend encore ici une deuxième branche de bouclage 72 entre un troisième point de bouclage 74 et un quatrième point de bouclage 76. Le troisième point de bouclage est situé entre le radiateur de chauffage 54 et le deuxième de bouclage 62 sur le circuit principal 48. Le quatrième point de bouclage est situé entre le premier point de bouclage 60 et la pompe principale 50 sur le circuit principal 48.

Ladite boucle de circulation du fluide caloporteur comprend en outre ici une deuxième branche de dérivation 68. Ladite deuxième branche de dérivation 68 comprend un radiateur de refroidissement 70. Ledit radiateur de refroidissement 70 est ici situé en face avant du véhicule pour être traversé par le flux d'air extérieur 8. Il est de préférence situé en aval de premier échangeur 2 selon le sens de circulation de l'air. Ladite branche deuxième de dérivation est située entre le troisième point de bouclage 74 et le quatrième point de bouclage 76.

Pour assurer les différents modes de circulation désirés, la boucle de circulation du fluide caloporteur comprend en outre des vannes, notamment des vannes bidirectionnelles. Il s'agit, par exemple, d'une troisième vanne bidirectionnelle 78 située sur le circuit principal 48 entre le troisième point de bouclage 74 et le deuxième point de bouclage 62. Il s'agit encore d'une quatrième vanne bidirectionnelle 80 située sur le circuit principal 48 entre le deuxième point de bouclage 62 et le troisième échangeur 6. Il s'agit encore d'une cinquième vanne bidirectionnelle 82 située sur la deuxième branche de bouclage 72. Il s'agit encore d'une sixième vanne bidirectionnelle 84 située sur la deuxième branche de dérivation 68.

Dans cette configuration, ledit vase d'expansion 56 est situé sur le circuit principal 48 entre le quatrième point de bouclage 76 et la pompe principale 50.

Comme illustré à la figure 2, avec l'exemple de circuit décrit plus haut, outre l'étape de dégivrage conforme à l'invention, il est également possible d'effectuer une climatisation de l'habitacle, sans refroidissement des composants électriques.

Dans ce mode de fonctionnement en refroidissement de l'habitacle, et comme illustré sur la figure 2, la boucle de circulation du fluide réfrigérant est parcourue de la façon suivante. En sortie du compresseur 14, le fluide réfrigérant suit tout d'abord la boucle de dégivrage 20 et traverse le deuxième échangeur 4 en délivrant de la chaleur au fluide caloporteur. Ledit fluide réfrigérant passe alors d'un état gazeux sous forte pression à un état liquide ou à tout le moins essentiellement liquide. Il traverse ensuite la bouteille 12 dans laquelle l'éventuelle fraction gazeuse du fluide est séparée de la fraction liquide de sorte que le fluide sort de la bouteille en phase liquide. Il traverse alors le détendeur 16, pleinement ouvert, et le premier échangeur de chaleur 2 où il subit un refroidissement forcé au contact du flux d'air extérieur 8. Il passe ensuite à travers la vanne anti-retour 44 pour atteindre la première branche de dérivation 26 où il traverse le troisième détendeur 46 en passant en basse pression. Il traverse alors l'évaporateur 22 où il change de phase pour repasser en phase vapeur et refroidir de la sorte le flux d'air intérieur 24, ce qui permet de refroidir l'habitacle. Il regagne alors la fin du circuit de dégivrage 20 pour rejoindre le compresseur 14 pour un nouveau cycle.

Dans ce mode, la première vanne bidirectionnelle 40 et la deuxième vanne bidirectionnelle 42 sont fermées ainsi que le deuxième détendeur 18.

Toujours dans ce mode, la boucle de circulation de fluide caloporteur est parcourue de la façon suivante. En sortie de la pompe principale 50, le fluide caloporteur suit le circuit principal 48 et passe à travers le deuxième échangeur 4 où il est réchauffé par le fluide réfrigérant. Le fluide caloporteur passe ensuite à travers le dispositif de chauffage électrique 52, non-actif. En variante non-illustré, il pourra passer par une branche de contournement dudit dispositif. Le fluide caloporteur passe alors à travers le radiateur de chauffage 54 qui est contourné par le flux d'air intérieur 24 afin que ce dernier ne soit pas réchauffé. Le fluide caloporteur emprunte alors la deuxième branche de dérivation 68 au niveau du troisième point de bouclage 74 pour passer à travers la sixième vanne bidirectionnelle 84 et le radiateur de refroidissement 70 dans lequel il se refroidit au contact du flux d'air extérieur 8. Il regagne alors le circuit principal 48 au niveau du quatrième point de bouclage 76 avant d'atteindre la pompe principale 50 pour un nouveau cycle.

Dans ce mode, la troisième vanne bidirectionnelle 78, la quatrième vanne bidirectionnelle 80 et la cinquième vanne bidirectionnelle 82 sont fermées. La sixième vanne bidirectionnelle 84 est ouverte.

Comme illustré à la figure 3, avec l'exemple de circuit décrit plus haut, il est également possible d'effectuer une climatisation de l'habitacle, avec refroidissement simultané des composants électriques.

Le trajet du fluide réfrigérant dans la boucle de circulation correspondante est le même que dans le mode de fonctionnement précédent si ce n'est que le deuxième détendeur 18 est ouvert. Le fluide réfrigérant circule ainsi dans l'ensemble du circuit de dégivrage 20 et dans la première branche de dérivation 26. Il passe donc aussi dans le deuxième détendeur 18 en aval duquel il est en basse pression et dans le troisième échangeur 6 où il refroidit le fluide caloporteur en passant en phase gazeuse.

Toujours dans ce mode, la boucle de circulation de fluide caloporteur est parcourue selon deux sous boucles, la première sous-boucle correspondant au circuit du fluide caloporteur du mode précédent. Dans une seconde sous-boucle, le fluide caloporteur suit le trajet suivant. En sortie de la pompe de bouclage 66, le fluide caloporteur traverse le cinquième échangeur 64 grâce auquel il refroidit les composants électriques. Il passe ensuite dans une portion du circuit principal 48 où il traverse la quatrième vanne bidirectionnelle 80 et le troisième échangeur 6 où il se refroidit avant de retourner dans la première branche de bouclage 58 pour atteindre la pompe de bouclage 66 pour un nouveau cycle.

Dans ce mode, la troisième vanne bidirectionnelle 78 et la cinquième vanne bidirectionnelle 82 sont fermées. La quatrième vanne bidirectionnelle 80 et la sixième vanne bidirectionnelle 84 sont ouvertes.

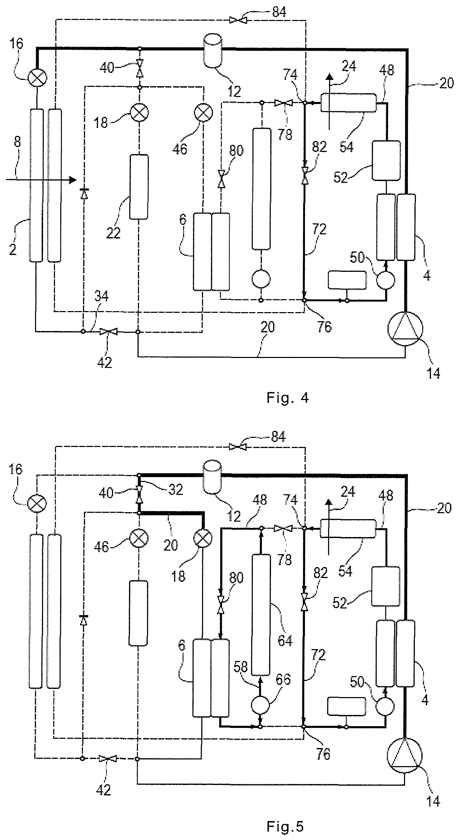

Comme illustré à la figure 4, avec l'exemple de circuit, décrit plus haut, il est également possible d'effectuer un chauffage de l'habitacle en mode pompe à chaleur.

La boucle de circulation du fluide réfrigérant est parcourue de la façon suivante. En sortie du compresseur 14, le fluide réfrigérant suit tout d'abord la boucle de dégivrage 20 et traverse le deuxième échangeur 4 en délivrant de la chaleur au fluide caloporteur. Ledit fluide réfrigérant passe alors d'un état gazeux sous forte pression à un état liquide ou à tout le moins essentiellement liquide. Il traverse ensuite la bouteille 12 dans laquelle l'éventuelle fraction gazeuse du fluide est séparée de la fraction liquide de sorte que le fluide sort de la bouteille en phase liquide. Il traverse alors le détendeur 16 en passant en basse pression et le premier échangeur de chaleur 2 fonctionnant en évaporateur et où il subit un passage en phase gazeuse grâce aux calories extraites sur le flux d'air extérieur 8. Il passe ensuite à travers la deuxième vanne bidirectionnelle 42 en empruntant la deuxième branche de contournement 34 avant de rejoindre le compresseur 14 par la portion de fin du circuit de dégivrage 20.

Dans ce mode, la première vanne bidirectionnelle 40 est fermée ainsi que le deuxième détendeur 18 et le troisième détendeur 46. Ainsi, ni le troisième échangeur 6 ni l'évaporateur 22 ne sont traversés par le fluide réfrigérant.

Toujours dans ce mode dit pompe à chaleur, la boucle de circulation de fluide caloporteur est parcourue de la façon suivante. En sortie de la pompe principale 50, le fluide caloporteur suit le circuit principal 48 et passe à travers le deuxième échangeur 4 où il est réchauffé par le fluide réfrigérant. Le fluide caloporteur passe ensuite à travers le dispositif de chauffage électrique 52, éventuellement actif pour compléter l'action du deuxième échangeur 4. Le fluide caloporteur passe alors à travers le radiateur de chauffage 54 qui réchauffe de la sorte le flux d'air intérieur 24. Le fluide caloporteur emprunte alors la deuxième branche de bouclage 72 au niveau du troisième point de bouclage 74 pour passer à travers la cinquième vanne bidirectionnelle 82 avant de regagner le circuit principal au niveau du quatrième point de bouclage 76 et atteindre la pompe principale 50 pour un nouveau cycle.

Dans ce mode, la troisième vanne bidirectionnelle 78, la quatrième vanne bidirectionnelle 80 et la sixième vanne bidirectionnelle 84 sont fermées. La cinquième vanne bidirectionnelle 82 est ouverte.

Comme illustré à la figure 5, avec l'exemple de circuit décrit plus haut, il est également possible d'effectuer une récupération de chaleur.

La boucle de circulation du fluide réfrigérant est parcourue de la façon suivante. En sortie du compresseur 14, le fluide réfrigérant suit tout d'abord la boucle de dégivrage 20 et traverse le deuxième échangeur 4 en délivrant de la chaleur au fluide caloporteur. Ledit fluide réfrigérant passe alors d'un état gazeux sous forte pression à un état liquide ou à tout le moins essentiellement liquide. Il traverse ensuite la bouteille 12 dans laquelle l'éventuelle fraction gazeuse du fluide est séparée de la fraction liquide de sorte que le fluide sort de la bouteille en phase liquide. Il passe alors par la première branche de contournement 32 en traversant la première vanne bidirectionnelle 40. Il retrouve alors le circuit de dégivrage pour passer dans le deuxième détendeur 18, en aval duquel il est en basse pression, et dans le troisième échangeur 6 où il passe en phase gazeuse grâce aux calories apportées par le fluide caloporteur. Il retourne enfin au compresseur 14 pour un nouveau cycle.

Dans ce mode, la deuxième vanne bidirectionnelle 42 est fermée ainsi que le premier détendeur 16 et le troisième détendeur 46.

Toujours dans ce mode, la boucle de circulation de fluide caloporteur est parcourue selon deux sous boucles, la première sous-boucle correspondant au circuit du fluide caloporteur du mode précédent et la seconde sous boucle à la seconde sous boucle du mode de réalisation permettant la climatisation avec refroidissement des composants électriques.

Dans ce mode dit récupération de chaleur, la chaleur captée au contact des composants électriques est utilisée pour réchauffer le fluide réfrigérant grâce à la seconde sous-boucle de fluide caloporteur. Le fluide réfrigérant peut de la sorte apporter des calories à la première sous-boucle de fluide caloporteur pour réchauffer le flux d'air intérieur 24. La chaleur des composants électriques est donc récupérée pour chauffer l'habitacle.

Dans ce mode, la troisième vanne bidirectionnelle 78 et la sixième vanne bidirectionnelle 84 sont fermées. La quatrième vanne bidirectionnelle 80 et la cinquième vanne bidirectionnelle 82 sont ouvertes.

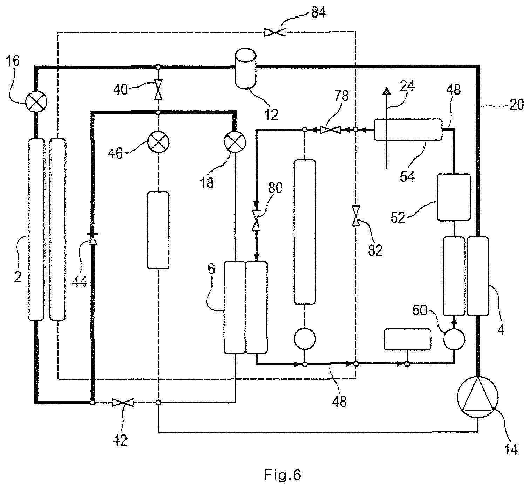

Cela étant, comme illustré à la figure 6 et comme déjà indiqué plus haut, le procédé conforme à l'invention a d'abord pour but de permettre un dégivrage du premier échangeur 2 grâce à ladite étape de dégivrage.

Selon cette étape, on fait circuler le fluide réfrigérant successivement dans le deuxième échangeur de chaleur 4, la bouteille 12 puis le premier échangeur 2 et le troisième échangeur 6 avec refroidissement du fluide réfrigérant dans le premier échangeur 2 et dans le deuxième échangeur 4 et réchauffage du fluide réfrigérant dans ledit troisième échangeur 6. Ainsi, le deuxième échangeur 4 et le premier échangeur 2 forment une source froide et le troisième échangeur 6 forme une source chaude dans le fonctionnement en système de réfrigération de la boucle de fluide réfrigérant, la différence entre la capacité de chauffage du deuxième échangeur 4 et la capacité de refroidissement du troisième échangeur 6 fournissant une capacité de chauffage au premier échangeur 2, ladite capacité de chauffage permettant un dégivrage dudit premier échangeur 2. La capacité totale de chauffage du circuit de régulation thermique est supérieure à sa capacité de refroidissement, notamment puisque le compresseur participe à la capacité de chauffage. Il est donc possible d'utiliser une partie de cette capacité de chauffage pour assurer le dégivrage du premier échangeur et c'est ce que propose l'invention.

Plus précisément, avec l'exemple de circuit décrit plus haut, la boucle de circulation du fluide réfrigérant est parcourue de la façon suivante. En sortie du compresseur 14, le fluide réfrigérant suit la boucle de dégivrage 20 et traverse le deuxième échangeur 4 en délivrant de la chaleur au fluide caloporteur. Ledit fluide réfrigérant passe alors d'un état gazeux sous forte pression à un état liquide ou à tout le moins essentiellement liquide. Il traverse ensuite la bouteille 12 dans laquelle l'éventuelle fraction gazeuse du fluide est séparée de la fraction liquide de sorte que le fluide sort de la bouteille en phase liquide. Il traverse alors le détendeur 16, où il subit une détente, et le premier échangeur de chaleur 2 dont il réchauffe les parois et permet le dégivrage. Il passe ensuite à travers la vanne anti-retour 44 puis le deuxième détendeur 18, éventuellement pleinement ouvert . Il traverse alors le troisième échangeur 6 où il change de phase pour repasser en phase vapeur grâce à la chaleur apportée par le fluide caloporteur. Il rejoint enfin le compresseur 14 pour un nouveau cycle.

Dans ce mode, la première vanne bidirectionnelle 40 et la deuxième vanne bidirectionnelle 42 sont fermées ainsi que le troisième détendeur 46 de sorte que le fluide réfrigérant parcoure uniquement la boucle dégivrage 20.

Toujours dans ce mode, la boucle de circulation de fluide caloporteur est parcourue de la façon suivante. En sortie de la pompe principale 50, le fluide caloporteur suit le circuit principal 48 et passe à travers le deuxième échangeur 4 où il est réchauffé par le fluide réfrigérant. Le fluide caloporteur passe ensuite à travers le dispositif de chauffage électrique 52, éventuellement actif. Le fluide caloporteur passe alors à travers le radiateur de chauffage 54 où il pourra éventuellement réchauffer le flux d'air intérieur 24. Le fluide caloporteur passe alors dans la troisième vanne bidirectionnelle 78, la quatrième vanne bidirectionnelle 80 et le troisième échangeur 6 où il est refroidi en donnant sa chaleur au fluide réfrigérant. Il poursuit ensuite le long du circuit principal 48 pour atteindre la pompe principale 50 pour un nouveau cycle.

Dans ce mode, la cinquième vanne bidirectionnelle 82 et la sixième vanne bidirectionnelle 84 sont fermées. La troisième vanne bidirectionnelle 78 et la quatrième vanne bidirectionnelle 80 sont ouvertes.

Comme déjà indiqué, lesdits deuxième et troisième échangeurs 4, 6 font préférentiellement partie de la boucle de fluide caloporteur, lesdits deuxième et troisième échangeurs 4, 6 étant connectés en série au moins pendant ladite étape de dégivrage. L'intérêt d'une telle configuration est que la chaleur délivrée par le fluide réfrigérant au fluide caloporteur par le deuxième échangeur 4 est réinjectée au moins en partie dans le fluide réfrigérant par le troisième échangeur 6. On dispose de la sorte d'un mode de dégivrage qui peut fonctionner sans autre échange de chaleur et grâce à un apport limité en énergie, ici, l'apport d'énergie du compresseur 14 et, à la marge, l'apport d'énergie de la pompe principale 50.

Cela étant, comme évoqué plus haut et si nécessaire, en mode dégivrage, le dispositif de chauffage électrique 52 dudit fluide caloporteur pourra être actif et permettre de la sorte au fluide réfrigérant de disposer d'une plus grande de capacité de chauffage pour le dégivrage. En effet, en cas de chaleur apportée par le dispositif de chauffage électrique 52, compte-tenu de la température alors plus élevée du liquide caloporteur dans la boucle de circulation du fluide caloporteur et des échanges intervenant entre le fluide caloporteur et le fluide réfrigérant, ledit fluide réfrigérant fonctionne alors à pression plus élevée dans la boucle de circulation du fluide réfrigérant.

A titre d'exemple, le liquide caloporteur est chauffé à 40°C par le dispositif de chauffage électrique 52 et il est refroidi à 30°C dans le troisième échangeur 6 avant d'être réchauffé par le second échangeur 4 à environ 36°C et recommencer un nouveau cycle d'échange. De son côté, le fluide réfrigérant est refroidi d'abord dans le second échangeur 4, pour réchauffer le liquide caloporteur, puis dans le premier échangeur 2, qu'il dégivre. Il est ensuite réchauffé dans le troisième échangeur 6 grâce aux calories alors apportées par le liquide caloporteur, qui refroidit.

Pour conserver le confort de l'habitacle, comme évoqué plus haut et si désiré, la capacité de chauffage du fluide caloporteur pourra aussi être utilisée pour réchauffer le flux d'air intérieur 24.

Avantageusement, ledit procédé comprend une étape de contrôle du dégivrage. Préférentiellement, celle-ci est effectuée dans un premier temps par le premier détendeur 16, notamment en ouvrant ou fermant ledit premier détendeur 16 en fonction des besoins, le second détendeur 18 étant entièrement ouvert ou à tout le moins sans changer le degré d'ouverture du second détendeur 18. Une telle régulation s'effectue, par exemple, de façon à ce que l'état de surchauffe du fluide réfrigérant à l'entrée du compresseur 14 se trouve entre une limite basse et une limite haute.

Si l'action du premier détendeur 16 ne suffit pas, on fait alors intervenir, dans un second temps, le second détendeur 18, qui se ferme progressivement si nécessaire, en particulier si l'état de surchauffe du fluide réfrigérant en sortie du troisième échangeur 6 est trop bas et/ou si la pression du fluide réfrigérant dans le premier échangeur 2 est insuffisante. A titre d'exemple, on fera en sorte que la pression du fluide réfrigérant dans le premier échangeur 2 soit supérieure 4 bars.

A titre d'exemple, le deuxième détendeur 18 est entièrement ouvert et on contrôle grâce au premier détendeur 16 l'état du fluide réfrigérant à l'entrée du compresseur 14. Si le liquide caloporteur n'est pas suffisamment chaud au niveau du troisième échangeur 6 et/ou si la pression du fluide réfrigérant dans le premier échangeur 2 est trop faible, on commence à fermer le troisième détendeur 18 de manière à maintenir le fluide réfrigérant dans le premier échangeur 2 à une pression permettant le dégivrage et/ou à maintenir ledit fluide réfrigérant dans un état surchauffé à l'entrée du compresseur 14. A l'inverse, si les conditions de pression et d'état du fluide sont remplies alors que le deuxième détendeur 18 n'est pas pleinement ouvert, on pourra procéder à l'ouverture dudit deuxième détendeur 18, éventuellement jusqu'à son état pleinement ouvert si les conditions le permettent.

Autrement dit, ledit procédé comprend une étape de vérification d'un état de surchauffe du fluide réfrigérant en sortie du troisième échangeur 6. Une telle étape de vérification pourra cependant avoir une autre action de régulation que l'ouverture/fermeture du premier détendeur 16 et/ou du deuxième détendeur 18, comme cela sera évoqué dans ce qui suit.

Alternativement ou cumulativement, ledit procédé comprend une étape de contrôle du débit de fluide caloporteur.

Avantageusement, ledit procédé comprend une étape de limitation du débit de fluide caloporteur, en particulier si l'état de surchauffe du fluide réfrigérant est inférieur à un seuil en sortie du troisième échangeur 6. La limitation du débit de fluide caloporteur permet au fluide réfrigérant de disposer de plus de capacité de chauffage pour le dégivrage.

Cela étant, il est préférable qu'un débit minimum de fluide caloporteur soit maintenu, notamment afin que l'état de surchauffe du fluide réfrigérant en sortie du troisième échangeur 6 soit supérieur au seuil choisi. Ledit procédé prévoit en ce sens, par exemple, une étape de détermination de la pression de fluide réfrigérant dans le troisième échangeur de chaleur 6 et une étape d'augmentation du débit de fluide caloporteur si la pression déterminée est inférieure à un premier seuil prédéterminé.

La pression de fluide réfrigérant dans le troisième échangeur de chaleur 6 est déterminée, notamment, par un capteur de mesure de pression. Alternativement, cette pression est assimilée à la pression en entrée du compresseur 14.

Le débit de fluide caloporteur est contrôlé, par exemple, par variation d'un régime de rotation de la pompe entrainant ledit fluide caloporteur en mode de dégivrage, ici la pompe principale 50.

Alternativement ou cumulativement, la régulation du débit de fluide caloporteur pourra avoir lieu en prévoyant que le procédé conforme à l'invention comporte une étape de détermination d'un rapport de compression du compresseur 14, le rapport de compression étant égal au rapport de la pression de sortie et de la pression d'entrée du compresseur, et une étape d'augmentation du débit de fluide caloporteur si le rapport de compression est supérieur à un seuil haut prédéterminé. En effet, on augmente le débit de fluide caloporteur si le rapport de compression est trop élevé, car il y aurait alors un risque de fiabilité pour le compresseur 14.

A l'inverse, ledit procédé comporte une étape de diminution du débit de fluide caloporteur si le rapport de compression est inférieur à un seuil bas prédéterminé. Par exemple, on peut diminuer le débit de fluide caloporteur tant que le rapport de compression est suffisamment supérieur à 1.

Le choix de la puissance de chauffage délivrée par le dispositif de chauffage électrique 52 et/ou du débit de fluide caloporteur permettent de rendre le dégivrage plus ou moins efficace et/ou plus ou moins rapide.

Si la puissance de chauffage délivrée par le dispositif de chauffage électrique 52 est trop faible, il existe alors un risque pour que l'énergie disponible pour le dégivrage soit trop limitée, le dégivrage étant alors plus lent. Par ailleurs, si la puissance de chauffage délivrée par le dispositif de chauffage électrique 52 est trop forte, le fluide caloporteur sera trop chaud ce qui pourra amener à des pertes par dissipation.

Le procédé conforme à l'invention pourra ainsi comprendre une étape de contrôle de la chaleur délivrée par le dispositif de chauffage électrique 52. Un tel contrôle pourra être effectué par rapport à une température seuil de sorte que son action de chauffage soit augmentée si la température relevée est inférieure à la température seuil et diminuée dans le cas inverse.

Une même stratégie d'optimisation est avantageuse pour le débit de fluide caloporteur. Un débit faible de fluide caloporteur génère un écart important entre la température du fluide caloporteur dans le troisième échangeur 6 et la température du fluide caloporteur dans le deuxième échangeur 4 ce qui à son tour génère un écart important entre un niveau de haute pression et un niveau de basse pression du fluide réfrigérant dans la boucle de fluide réfrigérant, ce qui est favorable au dégivrage. Si le débit de fluide caloporteur est cependant trop faible, la température du fluide caloporteur dans le troisième échangeur 6 sera trop faible, ce qui nuira cette fois à un bon fonctionnement de la boucle de circulation du fluide réfrigérant.

Alternativement ou cumulativement, ledit procédé comprend une étape de prise en compte d'un débit d'air entrant dans l'habitacle selon le flux d'air intérieur 24. Cela permet de doser l'influence d'un éventuel fonctionnement du radiateur de chauffage 54 sur le dégivrage.

La puissance de chauffage délivrée par le dispositif de chauffage électrique 52 sera avantageusement augmentée en cas de volonté de chauffage du flux d'air intérieur 54.

## Revendications

1. Procédé de dégivrage d'un circuit de régulation thermique pour véhicule, notamment pour véhicule automobile, ledit circuit de régulation thermique étant muni d'une boucle de circulation de fluide réfrigérant comprenant un premier échangeur de chaleur (2), susceptible de subir un givrage, ainsi que des deuxième et troisième échangeurs (4, 6), les deuxième et troisième échangeurs (4, 6) étant destinés à échanger de la chaleur entre le fluide réfrigérant et un fluide caloporteur, ladite boucle comprenant en outre une bouteille (12), située entre le deuxième échangeur (4) et le premier échangeur (2), permettant de stocker une partie dudit fluide réfrigérant, ledit procédé comprenant une étape, dite de dégivrage, de circulation du fluide réfrigérant successivement dans le deuxième échangeur de chaleur (4), la bouteille (12) puis les premier et troisième échangeurs (2, 6) avec refroidissement du fluide réfrigérant dans les premier et deuxième échangeurs (2, 4) et réchauffage du fluide réfrigérant dans ledit troisième échangeur (6).

2. Procédé selon la revendication 1 dans lequel lesdits deuxième et troisième échangeurs (4, 6) font partie d'une même boucle de fluide caloporteur du circuit de régulation thermique, lesdits deuxième et troisième échangeurs (4, 6) étant connectés en série au moins pendant ladite étape de dégivrage.

3. Procédé selon l'une quelconque des revendications précédentes dans lequel ladite boucle de fluide réfrigérant est configurée pour fonctionner selon un mode de pompe à chaleur en prélevant de la chaleur sur un flux d'air à l'aide dudit premier échangeur (2) et en restituant ladite chaleur au fluide caloporteur à l'aide dudit deuxième échangeur (4).

4. Procédé selon l'une quelconque des revendications précédentes dans lequel ladite boucle de circulation du fluide réfrigérant comprend un premier détendeur (16), situé entre la bouteille (12) et le premier échangeur (2) selon le sens de circulation du fluide réfrigérant, et un second détendeur (18), situé entre le premier échangeur (2) et le troisième échangeur (6) selon le sens de circulation du fluide réfrigérant, ledit procédé comprenant une étape de contrôle du dégivrage effectuée dans un premier temps par le premier détendeur (16), le second détendeur (16) étant entièrement ouvert, puis dans un second temps, par le second détendeur (18).

5. Procédé selon l'une quelconque des revendications précédentes dans lequel ledit procédé comprend une étape de contrôle du débit de fluide caloporteur, une étape de détermination de la pression dans le troisième échangeur de chaleur (6) et une étape d'augmentation du débit de fluide caloporteur si la pression déterminée est inférieure à un premier seuil prédéterminé.

6. Procédé selon l'une quelconque des revendications précédentes, en combinaison avec la revendication 2, dans lequel ladite boucle de circulation du fluide caloporteur comprend un dispositif de chauffage électrique (52) dudit fluide caloporteur, ledit dispositif de chauffage électrique (52) étant situé entre le deuxième échangeur (4) et le troisième échangeur (6) selon le sens de circulation du fluide caloporteur.

7. Procédé selon la revendication précédente dans lequel ledit procédé comprend une étape de contrôle de la chaleur délivrée par le dispositif de chauffage électrique (52).

8. Procédé selon l'une quelconque des revendications précédentes dans lequel ladite boucle de circulation du fluide réfrigérant comprend un compresseur (14), ledit compresseur (14) étant situé entre les troisième et deuxième échangeurs (6, 4) selon le sens de circulation du fluide réfrigérant.

9. Procédé selon la revendication précédente dans lequel ledit procédé comporte une étape de détermination d'un rapport de compression du compresseur (14), le rapport de compression étant égal au rapport de la pression de sortie et de la pression d'entrée du compresseur, et une étape d'augmentation du débit de fluide caloporteur si le rapport de compression est supérieur à un deuxième seuil prédéterminé.

10. Procédé selon la revendication précédente dans lequel ledit procédé comporte une étape de diminution du débit de fluide caloporteur si le rapport de compression est inférieur à un troisième seuil prédéterminé.

11. Procédé selon l'une quelconque des revendications 1, 3 ou 4 dans lequel lesdits deuxième et troisième échangeurs sont couplés thermiquement par un échangeur thermique intermédiaire, au moins pendant ladite étape de dégivrage.

## Patentansprüche

1. Verfahren zum Enteisen eines Thermoregulationskreislaufs für ein Fahrzeug, insbesondere für ein Kraftfahrzeug, wobei der Thermoregulationskreislauf mit einem Kältemittelkreislauf ausgestattet ist, der einen ersten Wärmetauscher (2), der zum Vereisen neigt, sowie einen zweiten und dritten Wärmetauscher (4, 6) umfasst, wobei der zweite und dritte Wärmetauscher (4, 6) dazu bestimmt sind, Wärme zwischen dem Kältemittel und einem Wärmeträgerfluid auszutauschen, wobei der Kreislauf ferner einen Sammler (12) umfasst, der zwischen dem zweiten Wärmetauscher (4) und dem ersten Wärmetauscher (2) angeordnet ist und das Speichern eines Teils des Kältemittels ermöglicht, wobei das Verfahren einen Enteisungsschritt umfasst, der die Zirkulation des Kältemittels nacheinander durch den zweiten Wärmetauscher (4), den Sammler (12) und dann den ersten und dritten Wärmetauscher (2, 6) mit Kühlung des Kältemittels in dem ersten und zweiten Wärmetauscher (2, 4) und Wiedererwärmung des Kältemittels in dem dritten Wärmetauscher (6) beinhaltet.

2. Verfahren nach Anspruch 1, wobei der zweite und dritte Wärmetauscher (4, 6) Teil desselben Wärmeträgerfluidkreislaufs des Thermoregulationskreislaufs sind, wobei der zweite und dritte Wärmetauscher (4, 6) zumindest während des Enteisungsschritts in Reihe geschaltet sind.

3. Verfahren nach einem der vorhergehenden Ansprüche, wobei der Kältemittelkreislauf so konfiguriert ist, dass er in einem Wärmepumpenmodus arbeitet, indem er Wärme aus einem Luftstrom unter Verwendung des ersten Wärmetauschers (2) entzieht und diese Wärme unter Verwendung des zweiten Wärmetauschers (4) an das Wärmeträgerfluid zurückgibt.

4. Verfahren nach einem der vorhergehenden Ansprüche, wobei der Kältemittelkreislauf ein erstes Expansionsventil (16), das zwischen dem Sammler (12) und dem ersten Wärmetauscher (2) in Strömungsrichtung des Kältemittels angeordnet ist, und ein zweites Expansionsventil (18) umfasst, das zwischen dem ersten Wärmetauscher (2) und dem dritten Wärmetauscher (6) in Strömungsrichtung des Kältemittels angeordnet ist, wobei das Verfahren einen Enteisungssteuerschritt umfasst, der anfänglich durch das erste Expansionsventil (16) durchgeführt wird, wobei das zweite Expansionsventil (18) vollständig geöffnet ist, und dann in einer zweiten Phase durch das zweite Expansionsventil (18).

5. Verfahren nach einem der vorhergehenden Ansprüche, wobei das Verfahren einen Schritt zur Steuerung der Durchflussrate des Wärmeträgerfluids, einen Schritt zur Bestimmung des Drucks in dem dritten Wärmetauscher (6) und einen Schritt zur Erhöhung der Durchflussrate des Wärmeträgerfluids umfasst, wenn der bestimmte Druck unter einem ersten vorbestimmten Schwellenwert liegt.

6. Verfahren nach einem der vorhergehenden Ansprüche, in Kombination mit Anspruch 2, wobei der Wärmeträgerfluidkreislauf eine elektrische Heizeinrichtung (52) für das Wärmeträgerfluid umfasst, wobei die elektrische Heizeinrichtung (52) zwischen dem zweiten Wärmetauscher (4) und dem dritten Wärmetauscher (6) in Strömungsrichtung des Wärmeträgerfluids angeordnet ist.

7. Verfahren nach dem vorhergehenden Anspruch, wobei das Verfahren einen Schritt zur Steuerung der von der elektrischen Heizeinrichtung (52) abgegebenen Wärme umfasst.

8. Verfahren nach einem der vorhergehenden Ansprüche, wobei der Kältemittelkreislauf einen Kompressor (14) umfasst, wobei der Kompressor (14) zwischen dem dritten und zweiten Wärmetauscher (6, 4) in Strömungsrichtung des Kältemittels angeordnet ist.

9. Verfahren nach dem vorhergehenden Anspruch, wobei das Verfahren einen Schritt zur Bestimmung eines Kompressionsverhältnisses des Kompressors (14) umfasst, wobei das Kompressionsverhältnis gleich dem Verhältnis des Ausgangsdrucks und des Eingangsdrucks des Kompressors ist, und einen Schritt zur Erhöhung der Durchflussrate des Wärmeträgerfluids, wenn das Kompressionsverhältnis größer als ein zweiter vorbestimmter Schwellenwert ist.

10. Verfahren nach dem vorhergehenden Anspruch, wobei das Verfahren einen Schritt zur Verringerung der Durchflussrate des Wärmeträgerfluids umfasst, wenn das Kompressionsverhältnis kleiner als ein dritter vorbestimmter Schwellenwert ist.

11. Verfahren nach einem der Ansprüche 1, 3 oder 4, wobei der zweite und dritte Wärmetauscher zumindest während des Enteisungsschritts durch einen Zwischenwärmetauscher thermisch gekoppelt sind.

## Claims

1. Method for defrosting a thermal regulation circuit for a vehicle, particularly for an automobile vehicle, said thermal regulation circuit being equipped with a refrigerant fluid circulation loop comprising a first heat exchanger (2), susceptible to frosting, as well as second and third exchangers (4, 6), the second and third exchangers (4, 6) being intended to exchange heat between the refrigerant fluid and a heat transfer fluid, said loop further comprising a receiver (12), located between the second exchanger (4) and the first exchanger (2), allowing a portion of said refrigerant fluid to be stored, said method comprising a defrosting step, involving the circulation of the refrigerant fluid successively through the second heat exchanger (4), the receiver (12) then the first and third exchangers (2, 6) with cooling of the refrigerant fluid in the first and second exchangers (2, 4) and reheating of the refrigerant fluid in said third exchanger (6).

2. Method according to claim 1, wherein said second and third exchangers (4, 6) are part of the same heat transfer fluid loop of the thermal regulation circuit, said second and third exchangers (4, 6) being connected in series at least during said defrosting step.

3. Method according to any one of the preceding claims, wherein said refrigerant fluid loop is configured to operate in a heat pump mode by extracting heat from an air flow using said first exchanger (2) and returning said heat to the heat transfer fluid using said second exchanger (4).

4. Method according to any one of the preceding claims, wherein said refrigerant fluid circulation loop comprises a first expansion valve (16), located between the receiver (12) and the first exchanger (2) in the direction of refrigerant fluid circulation, and a second expansion valve (18), located between the first exchanger (2) and the third exchanger (6) in the direction of refrigerant fluid circulation, said method comprising a defrosting control step performed initially by the first expansion valve (16), the second expansion valve (18) being fully open, then in a second phase, by the second expansion valve (18).

5. Method according to any one of the preceding claims, wherein said method comprises a step of controlling the flow rate of the heat transfer fluid, a step of determining the pressure in the third heat exchanger (6), and a step of increasing the flow rate of the heat transfer fluid if the determined pressure is below a first predetermined threshold.

6. Method according to any one of the preceding claims, in combination with claim 2, wherein said heat transfer fluid circulation loop comprises an electric heating device (52) for said heat transfer fluid, said electric heating device (52) being located between the second exchanger (4) and the third exchanger (6) according to the direction of circulation of the heat transfer fluid.

7. Method according to the preceding claim, wherein said method comprises a step of controlling the heat delivered by the electric heating device (52).

8. Method according to any one of the preceding claims, wherein said refrigerant fluid circulation loop comprises a compressor (14), said compressor (14) being located between the third and second exchangers (6, 4) according to the direction of circulation of the refrigerant fluid.

9. Method according to the preceding claim, wherein said method comprises a step of determining a compression ratio of the compressor (14), the compression ratio being equal to the ratio of the outlet pressure and the inlet pressure of the compressor, and a step of increasing the flow rate of the heat transfer fluid if the compression ratio is greater than a second predetermined threshold.

10. Method according to the preceding claim, wherein said method comprises a step of decreasing the flow rate of the heat transfer fluid if the compression ratio is less than a third predetermined threshold.

11. Method according to any one of claims 1, 3 or 4, wherein said second and third exchangers are thermally coupled by an intermediate heat exchanger, at least during said defrosting step.
